# EUROPÄISCHE PATENTSCHRIFT

(11) **EP 2 158 419 B1**
(45) Veröffentlichungstag und Bekanntmachung des Hinweises auf die Patenterteilung: **22.12.2010**
(21) Anmeldenummer: 08760052.4
(22) Anmeldetag: 27.05.2008
(51) Int. Cl.: F16H 57/08, F16D 1/033, F16D 1/076

(54) **DREHFESTE VERBINDUNG ZWEIER BAUTEILE EINES GETRIEBES ZUR DREHMOMENTÜBERTRAGUNG**
ROTATIONALLY FIXED CONNECTION OF TWO PARTS OF A TRANSMISSION FOR TRANSMITTING TORQUE
SOLIDARISATION EN ROTATION DE DEUX COMPOSANTS D'UNE BOÎTE DE VITESSE POUR LA TRANSMISSION DE COUPLE

(30) Priorität: 15.06.2007 DE 102007028258
(43) Veröffentlichungstag der Anmeldung: 03.03.2010
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); BREHMER, Martin, 78467 Konstanz (DE)
(86) Internationale Anmeldenummer: PCT/EP2008/056454
(87) Internationale Veröffentlichungsnummer: WO 2008/151921

(56) Entgegenhaltungen:
- DE-A1- 4 414 384
- DE-A1- 10 236 677
- DE-A1- 19 701 565
- DE-A1-102005 001 832
- FR-A- 2 208 473
- US-A1- 2003 232 693
- US-A1- 2006 128 480

## Beschreibung

Die vorliegende Erfindung bezieht sich auf die drehfeste Verbindung zweier Bauteile eines Getriebes zur Drehmomentübertragung gemäß dem Oberbegriff des Patentanspruchs 1.

Eine solche Verbindung ist aus der DE 4414384 A1 and auch aus der DE 10236677 A1 bekannt.

Vorrichtungen zum Verbinden von Bauteilen sind aus der Kraftfahrzeugtechnik bekannt. Beispielsweise ist aus der DE 2548581 A1 eine Rohrsteckverbindung mit einem zu einer Muffe erweiterten Außenrohr bekannt, in die das Innenrohrende eingesteckt ist, umfassend eine weitere muffenförmige Erweiterung am Muffenende, in die ein Druckring eingedrückt ist, der auf die in der muffenförmigen Erweiterung befindliche Dichtung einen Druck ausübt und der durch eine Rastverbindung mit dem Muffenende gehalten wird. Hierbei sind im Muffenende wenigstens zwei ringsum gleichmäßig verteilte Fenster vorgesehen, in die aus Teilen des Druckrings herausgeprägte Zungen eingreifen, die durch ihren Eingriff den Druckring festhalten.

Des weiteren ist aus der DE 20 2006 011 424 U1 der Anmelderin eine Schaltelementanordnung mit einem als Lamellenträger ausgebildeten Zylinder eines ersten Schaltelementes und einem als Lamellenträger oder Bandbremszylinder ausgebildeten Zylinder eines zweiten Schaltelementes bekannt, wobei der Zylinder des ersten Schaltelementes eine an einer Welle oder an einem Gehäuse gelagerte antreibbare Nabe aufweist, und wobei der Zylinder des zweiten Schaltelementes den Zylinder des ersten Schaltelementes zumindest weitgehend radial umschließt. Bei der bekannten Schaltelementanordnung ist der Zylinder des zweiten Schaltelementes am Außendurchmesser des Zylinders des ersten Schaltelementes verdrehbar gelagert.

Der vorliegenden Erfindung liegt die Aufgabe zugrunde, eine unlösbare, starre, spielfreie und drehfeste Verbindung zweier Bauteile eines Getriebes zur Drehmomentübertragung anzugeben, durch die die Drehmomentübertragung bei hohen Drehzahlen und Übertragungsmomenten über die Getriebelebensdauer sichergestellt ist. Des weiteren soll die Zentrierwirkung der Verbindungselemente die hohen Anforderungen bezüglich Rundlauf und Unwucht erfüllen. Insbesondere sollen Bauteile verbunden werden, die einen runden Querschnitt aufweisen.

Diese Aufgabe wird durch die Merkmale des Patentanspruchs 1 gelöst. Weitere erfindungsgemäße Ausgestaltungen und Vorteile gehen aus den Unteransprüchen hervor.

Nach Anspruch 1 wird unter anderem eine drehfeste Verbindung zweier Bauteile eines Getriebes zur Drehmomentübertragung vorgeschlagen, welche zwei unterschiedliche Arten von (formschlüssigen) Verbindungselementen umfasst, wobei eine Art von Verbindungselementen die Zentrierung der beiden zu verbindenden Bauteile und die Drehmomentübertragung gewährleistet und die andere Art von Verbindungselementen die axiale Fixierung der beiden Baueile und die Übertragung axialer Betriebskräfte ermöglicht.

Vorzugsweise sind die Verbindungselemente radial über den Umfang der sich gegenüberliegenden Seiten der miteinander zu verbindenden Bauteile angeordnet.

Nach Anspruch 1 wird unter anderem vorgeschlagen, die Verbindung mittels mehrerer an einem der beiden zu verbindenden Bauteile vorgesehener Kupplungselemente und Nietzapfen zu realisieren, wobei am anderen Bauteil entsprechende Schlitze und Nietlöcher zur Aufnahme der Kupplungselemente und der Nietzapfen vorgesehen sind. Vorzugsweise sind die Kupplungselemente und die Nietzapfen radial über den Umfang des einen zu verbindenden Bauteils angeordnet; die entsprechenden Schlitze und Nietlöcher sind radial über den Umfang des anderen zu verbindenden Bauteils vorgesehen.

Durch die erfindungsgemäß vorgesehenen Kupplungselemente wird eine Zentrierung der beiden zu verbindenden Bauteile über die tangentialen Flächen der Kupplungselemente erzielt; des weiteren wird das Drehmoment über die tangentialen Flächen der Kupplungselemente übertragen. Gemäß der Erfindung wird die axiale Fixierung der beiden Baueile und die Übertragung axialer Betriebskräfte durch die Nietzapfen realisiert.

Im Rahmen einer besonders vorteilhaften Ausführungsform der Erfindung sind die zu verbindenden Teile als Blechumformteile hergestellt, was in einer kostengünstigen Ausführung resultiert.

Die Kupplungselemente und die Nietzapfen werden in der Blechumformung durch einen Durchstellprozess erzeugt. Hierbei wird der Werkstoff auf der Rückseite des Bleches angeschnitten und auf der gegenüberliegenden Seite extrudiert. Hierdurch entstehen aus der Blechoberfläche herausragende Formelemente. Die Ausnehmungen (d.h. die Schlitze und die Nietlöcher) am zweiten Bauteil werden gemäß einer besonderen Ausführungsform der Erfindung vorzugsweise über Stanzen (Feinschneiden) erzeugt.

Alternativ zur Herstellung als Blechumformteile können die Bauteile mittels anderer Fertigungstechnologien, wie Gießen, Fräsen, usw. hergestellt werden.

Gemäß einer besonderen Ausführungsform der Erfindung ist das Tangentialspiel derart gestaltet, dass unter Berücksichtigung der Grundabmaße vom erhabenen Kupplungselement und des Schlitzes, sowie der Positionstoleranz dieser Elemente im Grenztoleranzfall eine leichte Überdeckung entsteht; des weiteren sind die Nietzapfen und die entsprechenden Nietlöcher mit einem vorgegebenen Spiel versehen.

Die Erfindung wird im folgenden anhand der beigefügten Figuren beispielhaft näher erläutert. Es zeigen:
- Figur 1:: Eine Schnittansicht eines Automatgetriebes eines Kraftfahrzeugs bei dem ein Topf, der den Planetenträger eines Radsatzes mit einem Innenlamellenträger eines Schaltelementes verbindet, mit dem Innenlamellenträger gemäß der vorliegenden Erfindung verbunden werden soll;
- Figur 2:: Eine perspektivische Innenansicht eines gemäß der Erfindung ausgebildeten und mit dem Innenlamellenträger zu verbindenden Topfes von innen;
- Figur 3:: Eine perspektivische Außenansicht eines gemäß der Erfindung ausgebildeten und mit dem Innenlamellenträger zu verbindenden Topfes;
- Figur 4:: Eine perspektivische Außenansicht eines gemäß der Erfindung ausgebildeten und mit dem Topf zu verbindenden Innenlamellenträgers;
- Figur 5:: Eine perspektivische Innenansicht eines gemäß der Erfindung ausgebildeten und mit dem Topf zu ver- bindenden Innenlamellenträgers;
- Figur 6:: Eine perspektivische Innenansicht des Topfes und des mit dem Topf gemäß der Erfindung verbundenen Innenlamellenträgers;
- Figur 7:: Eine perspektivische Detailansicht der Verbindung zwischen Topf und Innenlamellenträger; und
- Figur 8:: Eine perspektivische Detailansicht der Verbindung zwischen Topf und Innenlamellenträger.

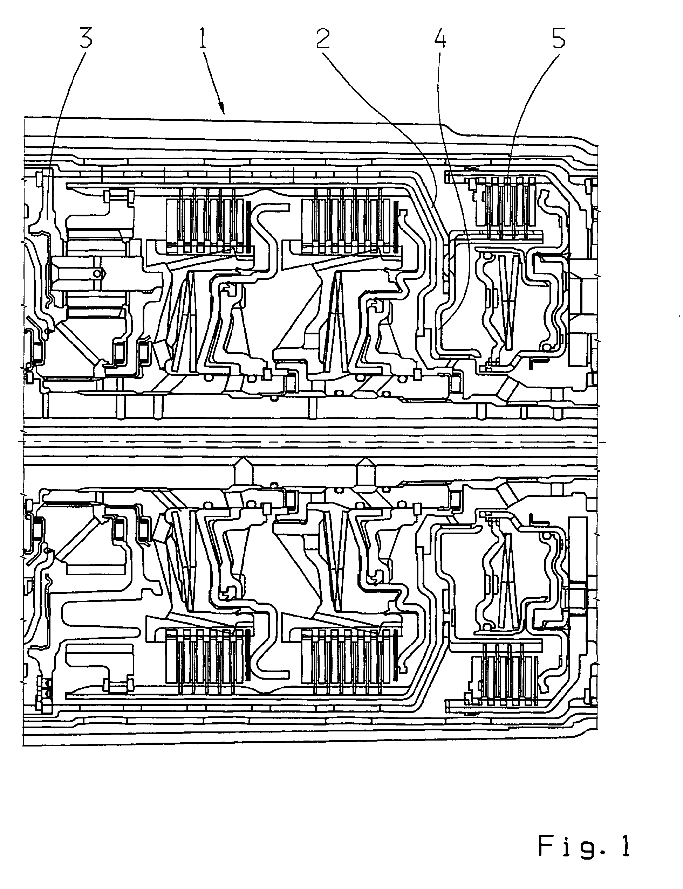

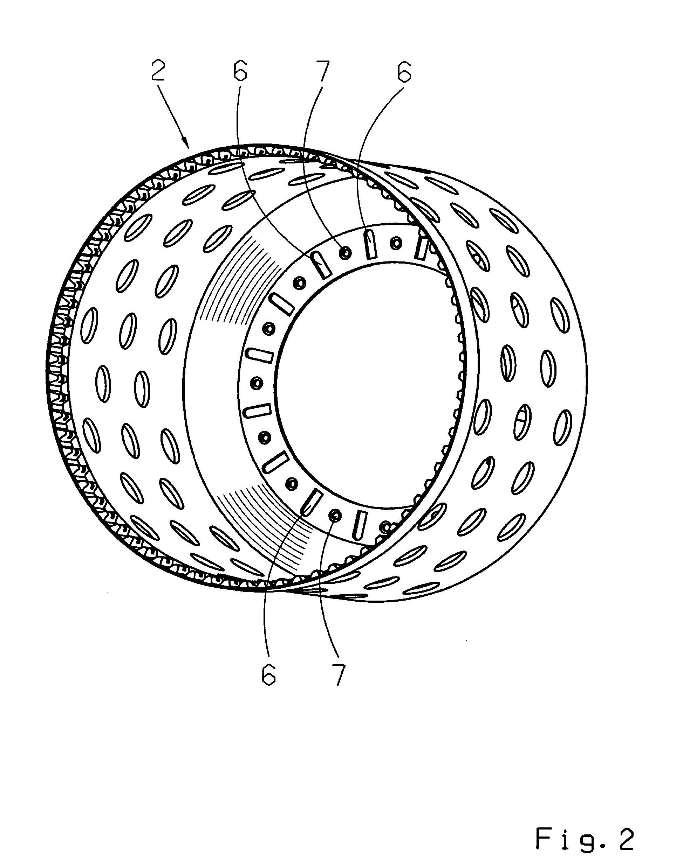

In Figur 1 ist ein Automatgetriebe 1 gezeigt, bei dem der Topf 2, der den Planetenträger 3 eines Radsatzes mit einem Innenlamellenträger 4 eines Schaltelementes 5 verbindet, mit dem Innenlamellenträger 4 gemäß der vorliegenden Erfindung verbunden werden soll. Zu diesem Zweck sind erfindungsgemäß am Innenlamellenträger 4 mehrere radial angeordnete vorzugsweise längliche Kupplungselemente und Nietzapfen vorgesehen, die mit am Topf 2 entsprechenden Schlitzen und Nietlöchern zur Aufnahme der Kupplungselemente und der Nietzapfen zusammenwirken, was anhand der Figuren 2 bis 8 veranschaulicht wird.

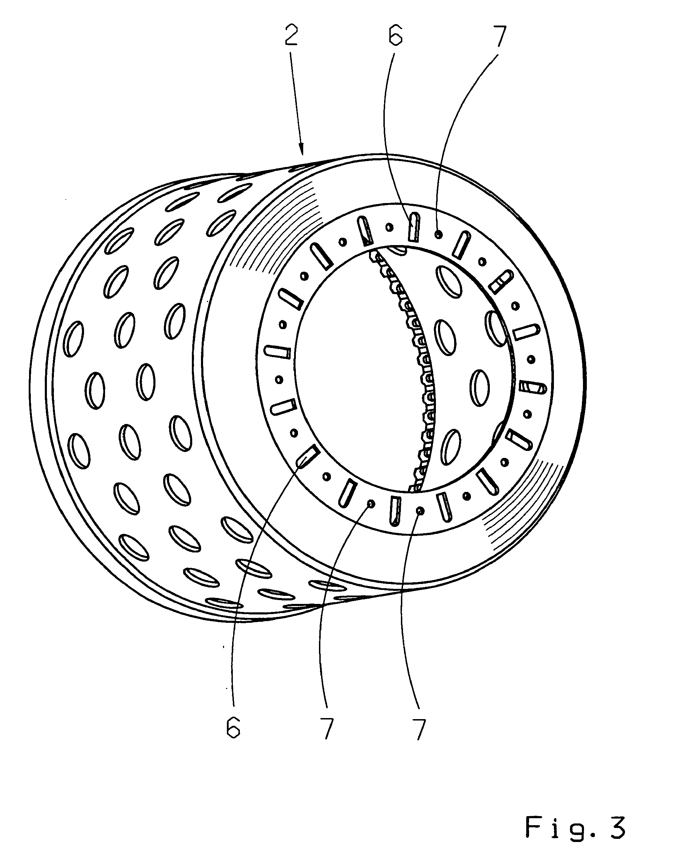

In Figur 2 ist ein erfindungsgemäß ausgebildeter Topf 2 dargestellt; die Schlitze 6 und die Nietlöcher 7 sind radial über den Umfang des dem Innenlamellenträger zugewandten Teils des Topfes 2 angeordnet. Figur 3 zeigt eine perspektivische Ansicht des in Figur 2 gezeigten Topfes 2. Die Schlitze 6 und die Nietlöcher 7 sind vorzugsweise ausgestanzt.

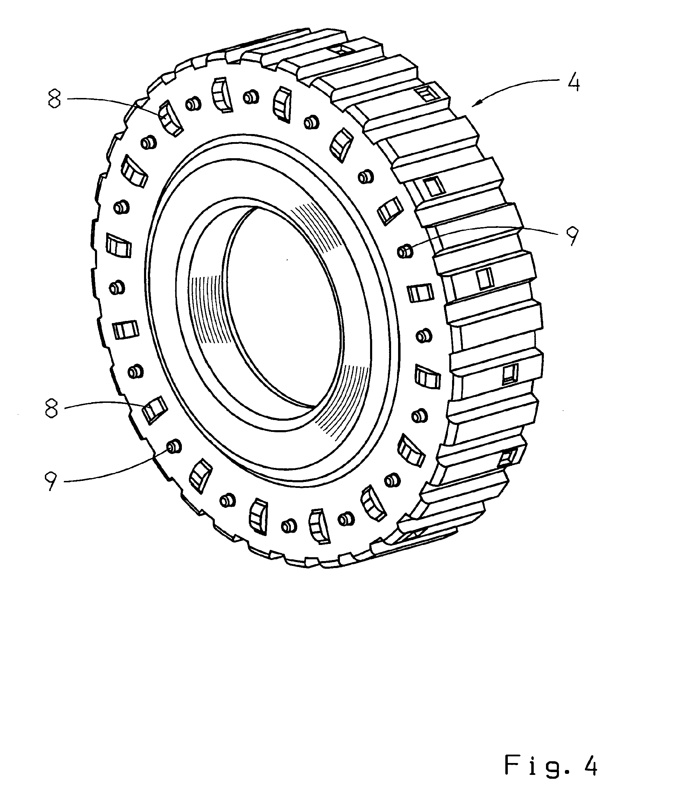

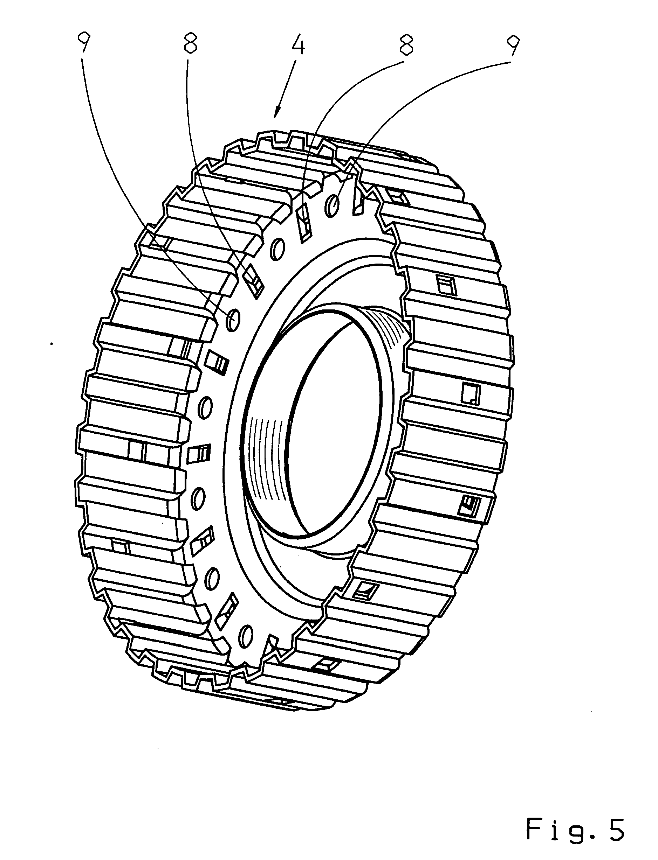

Gegenstand der Figur 4 ist eine perspektivische Ansicht des erfindungsgemäß ausgebildeten Innenlamellenträgers 4 von außen; Figur 5 zeigt eine perspektivische Innenansicht des Innenlamellenträgers 4. Wie aus Figuren 4 und 5 ersichtlich sind an der mit dem Topf 2 zu verbindenden Seite des Innenlamellenträgers 4 mehrere herausragende Kupplungselemente 8 und Nietzapfen 9 vorgesehen, die zur Herstellung der Verbindung mit den am Topf 2 vorgesehenen Schlitzen 6 und Nietlöchern 7 zusammenwirken.

Die Kupplungselemente 8 und die Nietzapfen 9 werden vorzugsweise im Rahmen einer Blechumformung durch einen Durchstellprozess erzeugt, wobei der Werkstoff auf der Rückseite des Bleches angeschnitten und auf der gegenüberliegenden Seite extrudiert wird, so dass die aus der Blechoberfläche herausragenden Kupplungselemente 8 und die Nietzapfen 9 entstehen.

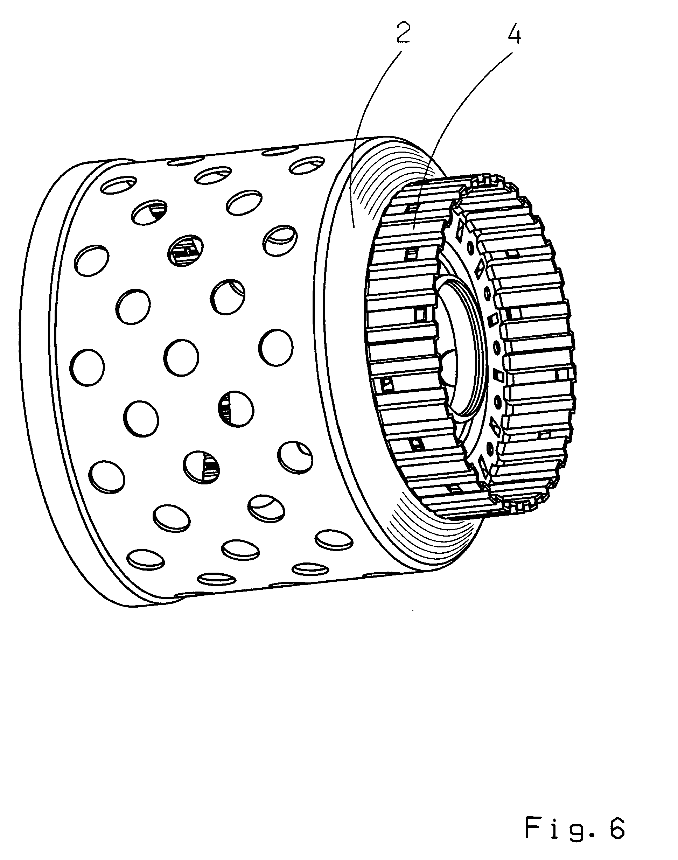

In Figur 6 ist der mit dem Innenlamellenträger 4 verbundene Topf 2 gezeigt. Die Verbindung entsteht gemäß der Erfindung durch axiales Fügen der zu verbindenden Bauteile und Vernieten der Nietzapfen, durch die die axiale Fixierung der beiden Baueile und die Übertragung axialer Betriebskräfte realisiert wird. Durch die tangentialen Flächen der Kupplungselemente wird erfindungsgemäß eine Zentrierung der beiden zu verbindenden Bauteile erzielt und die Drehmomentübertragung gewährleistet.

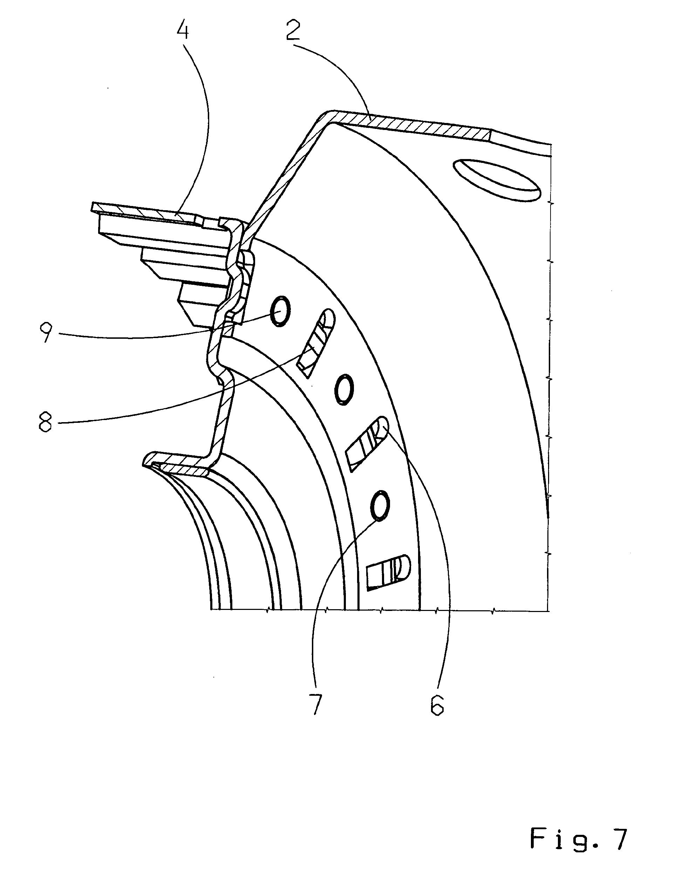

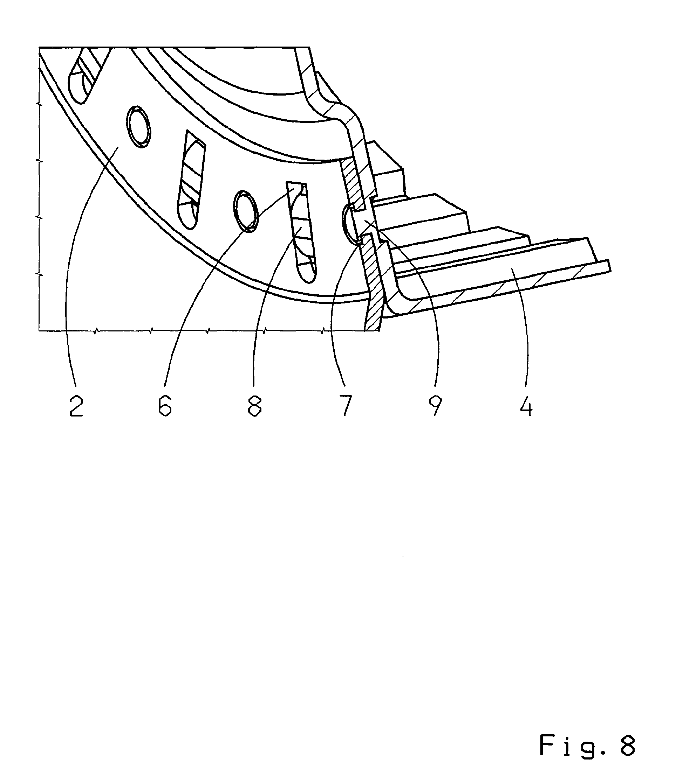

Die Verbindung zwischen Topf 2 und Innenlamellenträger 4 wird anhand Figuren 7 und 8 im Detail veranschaulicht. Gemäß der Erfindung ist das Tangentialspiel derart gestaltet, dass unter Berücksichtigung der Grundabmaße der erhabenen Kupplungselemente 8 und der Schlitze 6, sowie der Positionstoleranz der Kupplungselemente 8 und der Schlitze 6 im Grenztoleranzfall eine leichte Überdeckung entsteht. Besonders vorteilhaft ist es, wenn die Nietzapfen 9 und die entsprechenden Nietlöcher 7 mit einem vorgegebenen Spiel versehen sind.

Wie aus Figur 8 ersichtlich, sind die Nietzapfen 9 als Flachkopf vernietet, wobei die Kupplungselemente 8 derart dimensioniert sind, dass sie nach Herstellung der Verbindung zwischen den beiden zu verbindenden Teilen nicht hervorstehen.

Durch die erfindungsgemäße Konzeption wird eine kostengünstige, unlösbare, starre, spielfreie und drehfeste Verbindung zweier Bauteile eines Getriebes zur Drehmomentübertragung zur Verfügung gestellt, welche eine Drehmomentübertragung bei hohen Drehzahlen und Übertragungsmomenten über die Getriebelebensdauer gewährleistet. Die Verbindung weist in vorteilhafter Weise eine hohe Zentrierwirkung auf, welche den Anforderungen bezüglich Rundlauf und Unwucht genügt.

### Bezugszeichen

- 1: Automatgetriebe
- 2: Topf
- 3: Planetenträger
- 4: Innenlamellenträger
- 5: Schaltelement
- 6: Schlitz
- 7: Nietloch
- 8: Kupplungselement
- 9: Nietzapfen

## Patentansprüche

1. Drehfeste Verbindung zweier Bauteile (2, 4) eines Getriebes (1) zur Drehmomentübertragung mit einer Kombination von zwei unterschiedlichen Arten von Verbindungselementen (6, 7, 8, 9), wobei eine Art von Verbindungselementen (6, 8) die Zentrierung der beiden zu verbindenden Bauteile (2, 4) und die Drehmomentübertragung gewährleistet und die andere Art von Verbindungselementen (7, 9) die axiale Fixierung der beiden Baueile (2, 4) und die Übertragung axialer Betriebskräfte ermöglicht, **dadurch gekennzeichnet, dass** die drehfeste Verbindung mittels mehrerer an einem der beiden zu verbindenden Bauteile (4) vorgesehener Kupplungselemente (8) und Nietzapfen (9) realisiert ist, wobei am anderen Bauteil (2) entsprechende Schlitze (6) und Nietlöcher (7) zur Aufnahme der Kupplungselemente (8) und der Nietzapfen (9) vorgesehen sind, wobei die Verbindung durch axiales Fügen der zu verbindenden Bauteile (2, 4) und Vernieten der Nietzapfen (9) entsteht, wobei die Zentrierung der beiden zu verbindenden Bauteile (2, 4) und die Drehmomentübertragung durch die tangentialen Flächen der Kupplungselemente (8) gewährleistet ist und die axiale Fixierung der beiden Baueile (2, 4) und die Übertragung axialer Betriebskräfte durch die Nietzapfen (9) realisiert ist.

2. Drehfeste Verbindung zweier Bauteile (2, 4) eines Getriebes (1) zur Drehmomentübertragung, nach Anspruch 1, **dadurch gekennzeichnet, dass** die Nietzapfen (9) als Flachkopf vernietet sind und dass die Kupplungselemente (8) derart dimensioniert sind, dass sie nach Herstellung der Verbindung zwischen den beiden zu verbindenden Teilen (2, 4) nicht hervorstehen.

3. Drehfeste Verbindung zweier Bauteile (2, 4) eines Getriebes (1) zur Drehmomentübertragung, nach Anspruch 1 oder 2, **dadurch gekennzeichnet, dass** das Tangentialspiel derart gestaltet ist, dass unter Berücksichtigung der Grundabmaße der erhabenen Kupplungselemente (8) und der Schlitze (6) sowie der Positionstoleranz der Kupplungselemente (8) und der Schlitze (6) im Grenztoleranzfall eine leichte Überdeckung entsteht.

4. Drehfeste Verbindung zweier Bauteile (2, 4) eines Getriebes (1) zur Drehmomentübertragung, nach Anspruch 1, 2 oder 3, **dadurch gekennzeichnet, dass** die Nietzapfen (9) und die entsprechenden Nietlöcher (7) im Montagezustand mit einem vorgegebenen Spiel versehen sind.

5. Drehfeste Verbindung zweier Bauteile (2, 4) eines Getriebes (1) zur Drehmomentübertragung, nach einem der Ansprüche 1 bis 4, **dadurch gekennzeichnet, dass** die beiden zu verbindenden Bauteile als Blechumformteile hergestellt sind.

6. drehfeste Verbindung zweier Bauteile (2, 4) eines Getriebes (1) zur Drehmomentübertragung nach Anspruch 5, **dadurch gekennzeichnet, dass** die Kupplungselemente (8) und die Nietzapfen (9) in der Blechumformung durch einen Durchstellprozess erzeugbar sind, wobei der Werkstoff auf der Rückseite des Bleches angeschnitten und auf der gegenüberliegenden Seite durchgestellt wird.

7. Drehfeste Verbindung zweier Bauteile (2, 4) eines Getriebes (1) zur Drehmomentübertragung, nach Anspruch 5 oder 6, **dadurch gekennzeichnet, dass** die Schlitze (6) und die Nietlöcher (7) ausgestanzt sind.

## Claims

1. Rotationally fixed connection of two components (2, 4) of a gearbox (1) for torque transmission with a combination of two different types of connecting elements (6, 7, 8, 9), one type of connecting elements (6, 8) ensuring the centring of the two components (2, 4) to be connected and the torque transmission, and the other type of connecting elements (7, 9) making the axial fixing of the two components (2, 4) and the transmission of axial operating forces possible, **characterized in that** the rotationally fixed connection is realized by means of a plurality of rivet pins (9) and coupling elements (8) which are provided on one of the two components (4) to be connected, corresponding slots (6) and rivet holes (7) being provided on the other component (2) for receiving the coupling elements (8) and the rivet pins (9), the connection being produced by axial joining of the components (2, 4) to be connected and riveting of the rivet pins (9), the centring of the two components (2, 4) to be connected and the torque transmission being ensured by the tangential faces of the coupling elements (8), and the axial fixing of the two components (2, 4) and the transmission of axial operating forces being realized by the rivet pins (9).

2. Rotationally fixed connection of two components (2, 4) of a gearbox (1) for torque transmission, according to Claim 1, **characterized in that** the rivet pins (9) are riveted as a flat head, and **in that** the coupling elements (8) are dimensioned in such a way that they do not protrude after production of the connection between the two parts (2, 4) to be connected.

3. Rotationally fixed connection of two components (2, 4) of a gearbox (1) for torque transmission, according to Claim 1 or 2, **characterized in that** the tangential play is designed in such a way that a slight overlap is produced when taking into consideration the basic dimensions of the elevated coupling elements (8) and the slots (6) and the positioning tolerance of the coupling elements (8) and the slots (6) in the limiting tolerance case.

4. Rotationally fixed connection of two components (2, 4) of a gearbox (1) for torque transmission, according to Claim 1, 2 or 3, **characterized in that** the rivet pins (9) and the corresponding rivet holes (7) are provided with a predetermined play in the assembled state.

5. Rotationally fixed connection of two components (2, 4) of a gearbox (1) for torque transmission, according to one of Claims 1 to 4, **characterized in that** the components to be connected are produced as sheet-metal mouldings.

6. Rotationally fixed connection of two components (2, 4) of a gearbox (1) for torque transmission according to Claim 5, **characterized in that** the coupling elements (8) and the rivet pins (9) can be produced in the sheet-metal moulding operation by an inserting process, the material on the rear side of the sheet metal being cut and being inserted on the opposite side.

7. Rotationally fixed connection of two components (2, 4) of a gearbox (1) for torque transmission, according to Claim 5 or 6, **characterized in that** the slots (6) and the rivet holes (7) are stamped out.

## Revendications

1. Connexion solidaire en rotation de deux composants (2, 4) d'une transmission (1) pour le transfert de couple comprenant une combinaison de deux types différents d'éléments de connexion (6, 7, 8, 9), un type d'éléments de connexion (6, 8) assurant le centrage des deux composants à connecter (2, 4) ainsi que le transfert de couple et l'autre type d'éléments de connexion (7, 9) permettant la fixation axiale des deux composants (2, 4) ainsi que le transfert de forces de fonctionnement axiales, **caractérisée en ce que** la connexion solidaire en rotation est réalisée au moyen de plusieurs éléments d'accouplement (8) et tourillons de rivetage (9) prévus sur l'un des deux composants à connecter (4), la connexion s'effectuant par assemblage axial des composants à connecter (2, 4) et rivetage des tourillons de rivetage (9), le centrage des deux composants à connecter (2, 4) et le transfert de couple étant assurés par les surfaces tangentielles des éléments d'accouplement (8) et la fixation axiale des deux composants (2, 4) et le transfert des forces de fonctionnement axiales étant réalisés par les tourillons de rivetage (9).

2. Connexion solidaire en rotation de deux composants (2, 4) d'une transmission (1) pour le transfert de couple selon la revendication 1, **caractérisée en ce que** les tourillons de rivetage (9) sont rivetés sous forme de têtes plates et **en ce que** les éléments d'accouplement (8) sont dimensionnés de telle sorte qu'ils ne dépassent pas entre les deux pièces à connecter (2, 4) après la réalisation de la connexion.

3. Connexion solidaire en rotation de deux composants (2, 4) d'une transmission (1) pour le transfert de couple selon la revendication 1 ou 2, **caractérisée en ce que** le jeu tangentiel est configuré de telle sorte qu'en tenant compte des dimensions de base des éléments d'accouplement rehaussés (8) et des fentes (6) ainsi que de la tolérance de position des éléments d'accouplement (8) et des fentes (6) dans le cas d'une tolérance limite, il se produit un léger recouvrement.

4. Connexion solidaire en rotation de deux composants (2, 4) d'une transmission (1) pour le transfert de couple selon la revendication 1, 2 ou 3, **caractérisée en ce que** les tourillons de rivetage (9) et les trous de rivetage correspondants (7) sont pourvus dans l'état de montage avec un jeu prédéterminé.

5. Connexion solidaire en rotation de deux composants (2, 4) d'une transmission (1) pour le transfert de couple selon l'une quelconque des revendications 1 à 4, **caractérisée en ce que** les deux composants à connecter sont fabriqués sous forme de pièces façonnées en tôle.

6. Connexion solidaire en rotation de deux composants (2, 4) d'une transmission (1) pour le transfert de couple selon la revendication 5, **caractérisée en ce que** les éléments d'accouplement (8) et les tourillons de rivetage (9) peuvent être produits par un procédé de perçage avec traversée, le matériau étant coupé sur le dos de la tôle et traversant de l'autre côté.

7. Connexion solidaire en rotation de deux composants (2, 4) d'une transmission (1) pour le transfert de couple selon la revendication 5 ou 6, **caractérisée en ce que** les fentes (6) et les trous de rivetage (7) sont estampés.
